# EUROPEAN PATENT SPECIFICATION

(11) **EP 3 278 232 B1**
(45) Date of publication and mention of the grant of the patent: **20.01.2021**
(21) Application number: 15887980.9
(22) Date of filing: 31.03.2015
(51) Int. Cl.: H04L 12/24, H04L 12/26, H04M 3/08, H04M 3/493

(54) **SYSTEM AND METHOD FOR OFFLINE SURVIVABILITY**
SYSTEM UND VERFAHREN FÜR OFFLINE-ÜBERLEBENSFÄHIGKEIT
SYSTÈME ET PROCÉDÉ POUR LA PÉRENNITÉ HORS LIGNE

(43) Date of publication of application: 07.02.2018
(73) Proprietor: Interactive Intelligence Group, Inc., Indianapolis, IN 46278 (US)
(72) Inventor: NEIDERMYER, Richard M., Indianapolis, Indiana 46278 (US); KING, Kevin Elliott, Indianapolis, Indiana 46278 (US); WYSS, Felix Immanuel, Indianapolis, Indiana 46278 (US)
(74) Representative: FRKelly
(86) International application number: PCT/US2015/023527
(87) International publication number: WO 2016/159972

(56) References cited:
- WO-A1-2015/143408
- US-A1- 2005 203 673
- US-A1- 2009 109 959
- US-A1- 2013 066 960
- US-A1- 2014 269 446
- US-B1- 7 707 308
- US-B2- 7 272 662

## Description

### BACKGROUND

The present invention generally relates to telecommunications systems and methods, as well as cloud applications. More particularly, the present invention pertains the offline survivability of an IVR system in a cloud telephony system.

US-A-2014/269446 is generally directed to recording media, e.g. phone call conversations, for a contact center and, in particular, to safety concerns when a single storage device is used to record media for different contact centers, and discloses rerouting a call when a media controller fails. In particular, a processor is able to detect failure of the media controller during the telephony call, the failure of the media controller tearing down a first media path. In response to detecting the failure, the processor bridges a second media path between the first and second communication devices until a second media controller is identified. Once the second media controller is identified, the processor signals the second media controller to bridge and record media exchanged during the telephone call.

WO-A-2015/143408 is generally directed to local survivability in a distributed contact center to enable a local branch to continue to provide contact center service without access to the resources stored at a remote data center, and discloses servers using a local survivability mode, which may include setting a flag indicative that it is now in local survivability mode and awakening sleeping (i.e. stand-by) resources. Once the data center connection is restored, the flag may be unset and the awakened resources are put back into stand-by mode.

### SUMMARY

A system and method are presented for on premise and offline survivability of an interactive voice response system in a cloud telephony system. Voice interaction control may be divided from the media resources. Survivability is invoked when the communication technology between the Cloud and the voice interaction's resource provider is degraded or disrupted. The system is capable of recovering after a disruption event such that a seamless transition between failure and non- failure states is provided for a limited impact to a user's experience. When communication paths or Cloud control is reestablished, the user resumes normal processing and full functionality as if the failure had not occurred.

In one embodiment, the invention relates to a method for offline survivability in a cloud based communication system according to claim 1.

In another embodiment, the invention relates to a system for offline survivability in a cloud based communication system according to claim 14.

### BRIEF DESCRIPTION OF THE DRAWINGS

Figure 1 is a diagram illustrating an embodiment of an on premise system.
Figure 2 is a diagram illustrating an embodiment of failure points of an on premise system.
Figure 3 is a flowchart illustrating an embodiment of a process for system recovery in the event of path disruption.

### DETAILED DESCRIPTION

For the purposes of promoting an understanding of the principles of the invention, reference will now be made to the embodiment illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

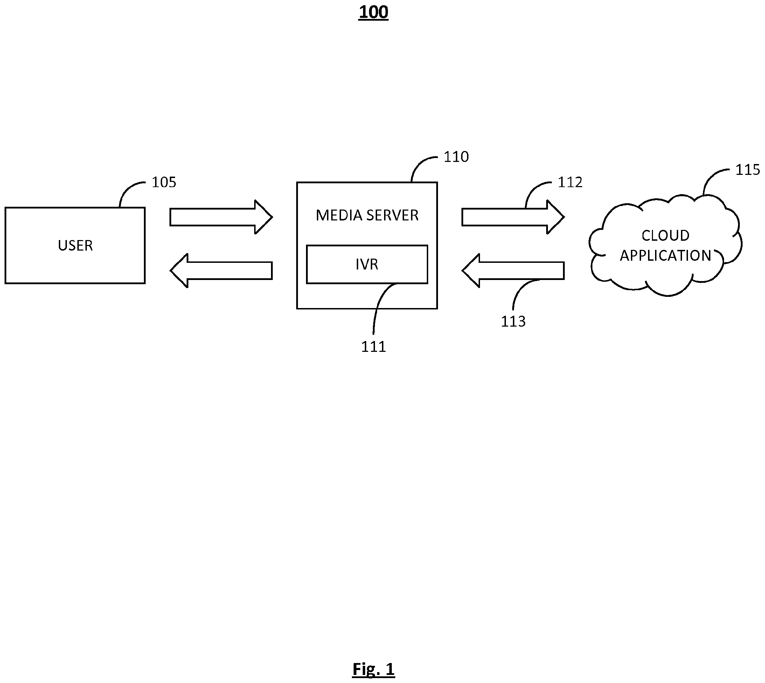

In an embodiment of a typical on premise system architecture for a media Interactive Voice Response (IVR) flow, the system comprises a number of key entities and communication paths. Figure 1 is a diagram illustrating an embodiment of an on premise system, indicated generally at 100. Remote computing topology may occur in any scenario where a media server is not physically connected to the computing resources which control communication flow and providing instructions. While common in a Cloud architecture, the system described may also apply in any environment where there is a network communication path between a media server and computing resources.

The User 105 comprises a primary user, such as a caller, of the media system and is the recipient of the IVR application 111. In an embodiment, the user 105 may provide input to the IVR application 111 directly to the Media Server 110 through a point-to-point connection and receive the response of the IVR application 111. It should be noted that it is within the scope of the embodiments disclosed herein that Users may also comprise Users of video communications, text chats, and other similar forms of communication and media.

The Media Server 110 comprises an IVR application 111 and executes the IVR application 111. The Media Server 110 may also provide the actual serving of audio to a User 105 and processing the User 105 responses. The Media Server 110 may also act as an intermediary between the User 105 and the Cloud Application 115 to service audio flow and execute application instructions, such as VoiceXML, CCXML, or similar. The Media Server 110 may need to communicate to the Cloud Application 115 at any time, such as by using an API to receive further instructions, retrieve audio resources, or fetch speech recognition grammars, for example.

The Media Response Path 112 comprises a network communication path which may provide a User's responses to an executing IVR 111 to the Cloud Application 115. The Cloud Application 115 evaluates these responses to determine the next communication or IVR media control path for the User 105.

The Media Control Path 113 comprises a communication path that provides the application instructions to the Media Server 110 for the media flow. The Media Control Path 113 may also serve media resources to the Media Server 110 in the form of documents.

The Cloud Application 115, in an embodiment, controls the Media Server 110 providing access to the logic in the form of script documents and access to audio resources using an API for the Media Server 110 to execute. The Cloud Application 115 may be maintained remotely from the physical Media Server 110 and communicate with one or more media servers over a network, inclusive of the Internet.

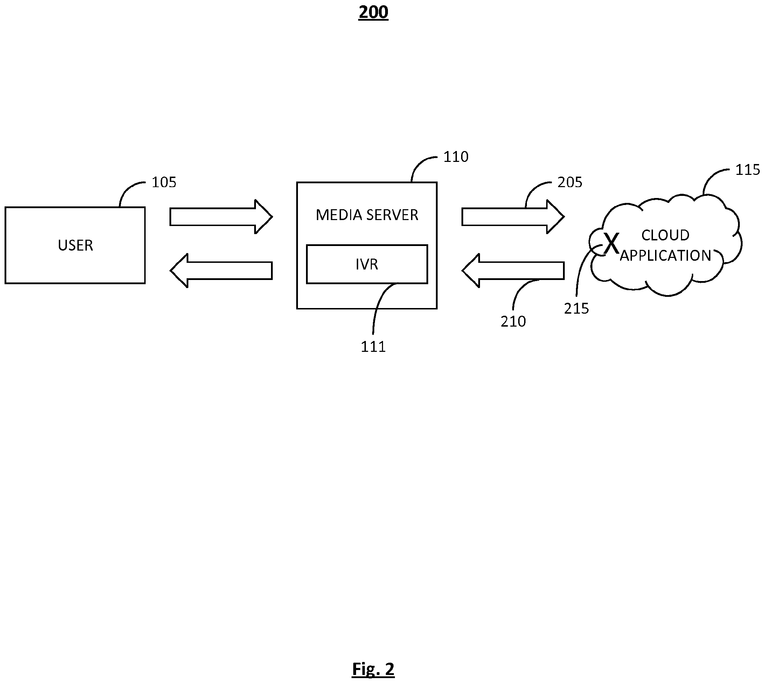

Failure of points within the cloud telephony system architecture may result in IVR application failure. Figure 2 a diagram illustrating an embodiment of failure points of an on premise system, indicated generally at 200. In an embodiment, the Media Response Path 205 may fail and result in an outage. A failure of the Media Response path 205 may result in a lack of response from the Media Server 110 to the Cloud Application 115. Without proper responses, the Cloud Application 115 will be unable to further direct a User 105 on the telephony system, resulting in the disconnection of the User 105. A loss of User input and abandonment of data may also occur, such as voicemail and fax data.

In another embodiment, the Media Control Path 210 may fail and result in an outage, similarly to the Media Response Path 205. This failure may occur over a brief or extended period of time where data is unable to be routed from the Cloud Application 115 to the Media Server 110. This failure may result in a loss of control of the media application executing on the Media Server 110 with an eventual complete loss of IVR functionality and interaction with the User 105.

In yet another embodiment, the Cloud Application may fail or the application host may encounter failure, indicated at 215. During this failure period, the Cloud Application would become unresponsive to its API requests and fail to serve documents and control the media IVR.

The described failure points are capable of failing simultaneously (such as in the case of shared paths and equipment) or they may fail independently of each other. Recovery results may vary, resulting in disjoint behavior between the Cloud Application 115 and the Media Server 110. A voice interaction would be considered to be in a failed state with the loss of any of the points and a poor user experience would occur with the cloud telephony system as well as potential loss of data.

Survivability of a Communication Failure focuses on providing the Media Server with necessary resources and logic paths to complete an entire user interaction without a communication roundtrip to the clod application. The users of the telephony system are able to proceed with their interactions with the IVR without knowledge of the failure state.

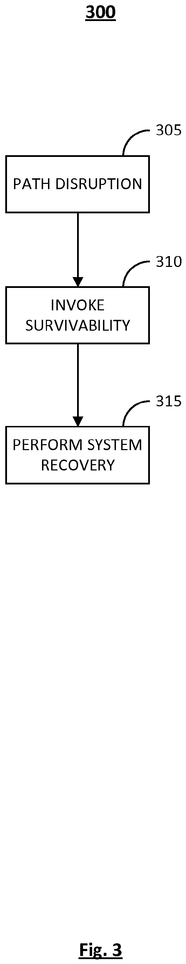

Figure 3 is a flowchart illustrating an embodiment of a process for system recovery in the event of path disruption, indicated generally at 300. This process is triggered when a path disruption, such as illustrated in Figure 2, occurs.

In operation 305, a path disruption has been determined to occur by the system. For example, a failure point may be indicated by the system along the media control network path, the media response network path, and/or a failure of the cloud application or host of the application. The failure points may fail simultaneously in the case of shared paths and equipment or they could fail independently of each other. Control is passed to operation 310 and process 300 continues.

In operation 310, survivability is invoked. For example, the media server needs to be provided with necessary resources and logic paths in order to complete an entire voice interaction without a communication roundtrip to the cloud application. This may be performed with a media server resource cache, host route operations, and load distribution, for example.

A dynamic local cache on the media server may be used to ensure that the resources needed to complete an IVR interaction are local to the device and can be accessed even when the cloud application download path has failed. In order to complete an IVR session, the media server host that is local to the point-to-point media caller connection must have access to the media resources. Media resources are inclusive of audio files, grammar definitions, and language models. In a static telephony system, these resources may be managed locally. In a cloud application telephony system, these resources are dynamic in nature and subject to continuous change, which is not conducive to a traditional local install approach.

The cache is capable of continuous resource updates during the periods that it has connectivity to the cloud application. The most recent and desirable resources for application are maintained for the application and are executed on the next IVR request. The cache may be controlled by the cloud application using cache attributes such as max valid and max stale values, for example. In an embodiment, the IVR is capable of executing an outdated interaction, due to a long period connectivity loss, but still succeed in a successful interaction with the user without the user noticing the failure.

Host route operations allow successful IVR sessions by performing the sequence on the host without any communication to the cloud application. For example, the cloud application is in control of the media operations as well as communication control to route a specific user to a specific destination endpoint (such as the IVR). As the media server is a local point-to-point connection with the user that is unaffected by communication path failures, it must also be able to route that user and initiate an IVR session. This is accomplished by leveraging the local resource cache and having it include the caller route information necessary to direct an IVR. The cached resource includes ANI and DNIS route match criteria, potentially a language tag, and other meta-data delivered by an operator.

When a user interaction is received on the system, the cached local route data is referenced to direct the user to the appropriate IVR. In times of connectivity, this may include a roundtrip message with the cloud application. During failed connectivity, this sequence may be performed effectively on the host without any communication to the cloud application providing a successful IVR session to the user.

Load distribution allows IVR users to be effectively routed to different media servers within the group to maintain a balanced load across the local system during the periods that the cloud application is unable to communicate with the media server(s). During a period where a media server or multiple media servers are disconnected from the cloud operation, there is potential to overload any single media server in the group with too many IVR sessions. A load distribution routine is performed as a component of host route operations. The route data maintains knowledge of all of the media servers that the cloud application has directed to service a specific group of calls and thus, effectively route IVR users to different media servers within the group. Control is passed to operation 315 and process 300 continues.

In operation 315, system recovery is performed. It is necessary to be able to fully recover from the disconnection period without any loss of data. The IVR interaction with a user has occurred and responses are recorded by the media server (e.g. DTMF and speech input, recordings, faxes, voicemail, communication information, interaction details, etc.). The media server needs to deliver that information to the cloud application so that it can complete its interaction process flow. Recovery may occur in real time, allowing the cloud application to exert control over in-progress IVR interactions. Processes such as event queuing and input retention may be used for recovery.

During the process of a normal IVR flow execution, one or more communication events are sent to the cloud application to drive the overall system's functionality and reporting. During a period of connection failure, these events do not reach the cloud application. The events must not be discarded. A delivery queue capable of storing these events locally with time sequence may be implemented. Events may also be persisted to non-volatile memory to allow for recovery through periods of media server downtime that may occur before network connectivity is restored, or before full recovery is completed. The event queueing mechanism is able to self-diagnose communication path failures and being queuing as necessary. The event queuing mechanism is also able to determine when the upload communication path is reestablished to begin its recovery process with the cloud application. Upon recovery, all events are delivered to the cloud application with original time sequencing intact. The cloud application is further capable of disambiguating current live activity from historical activity that occurred during a period of communication failure.

Host input retention provides for a complete and uninterrupted IVR experience for a user during the period of communication failure. Many IVR applications require that user input be played back to the caller for verification purposes. Retaining such data on the host provides for this requirement even during a period of network communication loss where the cloud application API cannot be accessed by the IVR for instructions to execute.

IVRs are often used to receive input from a user in the form of voice (such as a recording), input (DTMF, ASR), or data (fax), for example. During communication path failure, the media server must continue to receive and process this input. The data must also be retained for future delivery to the cloud application. In an embodiment, input retention may use event queuing as a portion of its implementation. Input retention provides a mechanism for the media server to store user-input data during failure and deliver that data upon recovery. Data, such as voicemails or credit card numbers, may be sensitive and require additional security measures. As such, the data may be encrypted on the host during the disruption period for a secure delivery of the data when the upload communication path is recovered.

While the invention has been illustrated and described in detail in the drawings and foregoing description, the same is to be considered as illustrative and not restrictive in character, it being understood that only the preferred embodiment has been shown and described and that all changes, and modifications that fall within the scope of the following claims are desired to be protected.

Hence, the scope of the present invention should be determined only by the appended claims.

## Claims

1. A method for offline survivability in a cloud based communication system (100), wherein the system (100) comprises at least a cloud application (115) operating on a server and a media server (110), the cloud application operating on said server remotely from the media server, the method comprising the steps of:
a. receiving, by the media server (110), a communication from a user (105);
b. receiving, from the user (105), input to the media server (110) through a point-to-point connection, the input to the media server (110) being provided to the cloud application (115);
c. transmitting, to the user (105), a response from the media server (110), wherein the media server (110) services the audio flow and executes application instructions received from the cloud application (115);
d. determining (305), by an event queuing mechanism of the system (100), whether an upload communication path has been disrupted between the media server (110) and the cloud application (115); and
e. invoking (310), by the media server (110) survivability in response to determining that the communication path has been disrupted;
wherein the step of invoking survivability comprises the steps of:
continuing to receive and process the input during the disruption;
retaining the input for future delivery to the cloud application (115) using the event queuing mechanism;
determining by the event queuing mechanism whether the upload communication path has been re-established; and
delivering the retained input with original time sequencing intact to the cloud application (115) in response to determining that the physical communication path has been re-established.

2. The method of claim 1, wherein survivability further comprises enabling the media server (110) to complete the communication without a communication roundtrip to the cloud application (115) by providing resources and logic paths.

3. The method of claim 2, wherein the step of providing resources and logic paths comprises providing at least one of: a media server resource cache, host route operations, and load distribution.

4. The method of claim 3, wherein the media server resource cache is capable of being accessed by the media server (110) when a download path of the cloud application (115) fails.

5. The method of claim 3, wherein the host route operations comprise:
a. leveraging, by the media server (110), local resource caches by having them include caller route information and using the caller route information to route the user (105) to an interactive voice response system;
b. referencing local route data; and
c. directing, by the media server (110), the communication to the interactive voice response system (100).

6. The method of claim 3, wherein the load distribution comprises routing a user (105) to different media servers (110) within a group of media servers (110) that are directed by the cloud application (115) to service a specific group of users (105), wherein a balanced load is maintained across the system (100).

7. The method of claim 1, further comprising the step of recovering from the communication path disruption.

8. The method of claim 7, wherein the step of recovering further comprises:
a. determining that the communication path is reestablished between the media server (110) and the cloud application (115);
b. delivering all communication events to the cloud application (115) via a delivery queue; and
c. delivering data to the cloud application (115) upon recovery.

9. The method of claim 8, wherein the delivery queue is capable of locally storing communication events.

10. The method of claim 8, wherein the data has been stored on the media server (110) during the communication path disruption.

11. The method of claim 10, wherein the data is encrypted while being stored on the media server (110) during the disruption.

12. The method of claim 8, wherein the data comprises: communication recordings, voicemail, faxes, communication information, DTMF, speech input, and interaction details.

13. The method of claim 1, wherein the media server (110) comprises an interactive voice response system (100).

14. A system for offline survivability in a cloud based communication system (100) comprising:
a. a media server (110) comprising an interactive voice response system, the media server (110) being configured to receive, from a user (105), input through a point-to- point connection; and
b. a cloud application operating on a server remotely from the media server (115) configured to communicate with the media server (110)
c. over a network communication path,
wherein input from the user (105) received at the media server (110) is provided to the cloud application (115) from the media server (11 0); the cloud application (115) is configured to provide application instructions to the media server (110); and the media server (110) is configured to service an audio flow and to execute the application instructions received from the cloud application (115); and
wherein an event queuing mechanism of the system is configured to determine whether an upload communication path has been disrupted between the media server (110) and the cloud application (115) and to invoke survivability in response to determining that the communication path has been disrupted, and, when survivability is invoked, the media server (110) is configured to:
continue to receive and process the input during the disruption,
retain the input for future delivery to the cloud application using the event queuing mechanism (115), determine by the event queuing mechanism whether the upload communication path has been re-established, and
deliver the retained input with original time sequencing intact to the cloud application (115) in response to determining that the physical communication path has been re-established.

15. The system of claim 14, wherein the media server (110) further comprises a mechanism for storing user-input data during disruption and delivering the user-input data to the cloud application (115) upon recovery.

## Patentansprüche

1. Verfahren für Offline-Überlebensfähigkeit in einem Cloud-basierten Kommunikationssystem (100), wobei das System (100) zumindest eine Cloud-Anwendung (115), die auf einem Server betrieben wird, und einen Medienserver (110) umfasst, wobei die Cloud-Anwendung auf dem Server entfernt von dem Medienserver betrieben wird, wobei das Verfahren die folgenden Schritte umfasst:
a. Empfangen, durch den Medienserver (110), einer Kommunikation von einem Nutzer (105);
b. Empfangen, von dem Nutzer (105), einer Eingabe in den Medienserver (110) über eine Punkt-zu-Punkt-Verbindung, wobei die Eingabe in den Medienserver (110) an die Cloud-Anwendung (115) bereitgestellt wird;
c. Übertragen, an den Nutzer (105), einer Antwort von dem Medienserver (110), wobei der Medienserver (110) den Audiofluss bedient und Anwendungsanweisungen, die von der Cloud-Anwendung (115) erhalten werden, ausführt;
d. Bestimmen (305), durch einen Ereigniswarteschlangenmechanismus des Systems (100), ob ein Upload-Kommunikationspfad zwischen dem Medienserver (110) und der Cloud-Anwendung (115) unterbrochen wurde; und
e. Aufrufen (310), durch den Medienserver (110), von Überlebensfähigkeit als Reaktion auf das Bestimmen, dass der Kommunikationspfad unterbrochen wurde;
wobei der Schritt des Aufrufens von Überlebensfähigkeit die folgenden Schritte umfasst:
Fortfahren, die Eingabe während der Unterbrechung zu empfangen und zu verarbeiten;
Beibehalten der Eingabe zur zukünftigen Bereitstellung an die Cloud-Anwendung (115) unter Verwendung des Ereigniswarteschlangenmechanismus;
Bestimmen, durch den Ereigniswarteschlangenmechanismus, ob der Upload-Kommunikationspfad neu aufgebaut wurde; und
Bereitstellen der beibehaltenen Eingabe mit intakter ursprünglicher Zeitsequenzierung an die Cloud-Anwendung (115) als Reaktion auf das Bestimmen, dass der physische Kommunikationspfad neu aufgebaut wurde.

2. Verfahren nach Anspruch 1, wobei die Überlebensfähigkeit ferner umfasst, es dem Medienserver (110) zu ermöglichen, die Kommunikation ohne einen Kommunikationsrundlauf zu der Cloud-Anwendung (115) abzuschließen, indem Ressourcen und Logikpfade bereitgestellt werden.

3. Verfahren nach Anspruch 2, wobei der Schritt des Bereitstellens von Ressourcen und Logikpfaden ein Bereitstellen zumindest eines der Folgenden umfasst: einem Medienserver-Ressourcen-Cache, Host-Weiterleitungsoperationen und Lastverteilung.

4. Verfahren nach Anspruch 3, wobei der Medienserver-Ressourcen-Cache in der Lage ist, dass darauf durch den Medienserver (110) zugegriffen wird, wenn ein Download-Pfad der Cloud-Anwendung (115) ausfällt.

5. Verfahren nach Anspruch 3, wobei die Host-Weiterleitungsoperationen Folgendes umfassen:
a. Nutzen, durch den Medienserver (110), lokaler Ressourcen-Caches, indem diese Anrufer-Weiterleitungsinformationen beinhalten und die Anrufer-Weiterleitungsinformationen dazu verwendet werden, den Nutzer (105) zu einem interaktiven Sprachantwortsystem weiterzuleiten;
b. Referenzieren von lokalen Weiterleitungsdaten; und
c. Leiten, durch den Medienserver (110), der Kommunikation zu dem interaktiven Sprachantwortsystem (100) .

6. Verfahren nach Anspruch 3, wobei die Lastverteilung ein Weiterleiten eines Nutzers (105) zu unterschiedlichen Medienservern (110) innerhalb einer Gruppe von Medienservern (110) umfasst, die durch die Cloud-Anwendung (115) dazu angeleitet sind, eine konkrete Gruppe von Nutzern (105) zu bedienen, wobei eine ausgeglichene Last in dem System (100) aufrechterhalten wird.

7. Verfahren nach Anspruch 1, ferner umfassend den Schritt des Wiederherstellens aus der Kommunikationspfadunterbrechung.

8. Verfahren nach Anspruch 7, wobei der Schritt des Wiederherstellens Folgendes umfasst:
a. Bestimmen, dass der Kommunikationspfad zwischen dem Medienserver (110) und der Cloud-Anwendung (115) neu aufgebaut ist;
b. Bereitstellen aller Kommunikationsereignisse an die Cloud-Anwendung (115) über eine Bereitstellungswarteschlange; und
c. Bereitstellen von Daten an die Cloud-Anwendung (115) bei Wiederherstellung.

9. Verfahren nach Anspruch 8, wobei die Bereitstellungswarteschlange in der Lage ist, Kommunikationsereignisse lokal zu speichern.

10. Verfahren nach Anspruch 8, wobei die Daten während der Kommunikationspfadunterbrechung auf dem Medienserver (110) gespeichert werden.

11. Verfahren nach Anspruch 10, wobei die Daten verschlüsselt sind, während sie während der Unterbrechung auf dem Medienserver (110) gespeichert werden.

12. Verfahren nach Anspruch 8, wobei die Daten Folgendes umfassen: Kommunikationsaufzeichnungen, Sprachnachrichten, Faxe, Kommunikationsinformationen, DTMF, Spracheingaben und Interaktionsdetails.

13. Verfahren nach Anspruch 1, wobei der Medienserver (110) ein interaktives Sprachantwortsystem (100) umfasst.

14. System zur Offline-Überlebensfähigkeit in einem Cloud-basierten Kommunikationssystem (100), umfassend:
a. einen Medienserver (110), umfassend ein interaktives Sprachantwortsystem, wobei der Medienserver (110) dazu konfiguriert ist, von einem Nutzer (105) Eingabe über eine Punkt-zu-Punkt-Verbindung zu empfangen; und
b. eine Cloud-Anwendung, die auf einem Server betrieben wird, der von dem Medienserver (115) entfernt ist und dazu konfiguriert ist, mit dem Medienserver (110)
c. über einen Netzwerkkommunikationspfad zu kommunizieren,
wobei Eingabe von dem Nutzer (105), die an dem Medienserver (110) empfangen wird, der Cloud-Anwendung (115) von dem Medienserver (110) bereitgestellt wird; die Cloud-Anwendung (115) dazu konfiguriert ist, Anwendungsanweisungen an den Medienserver (110) bereitzustellen; und der Medienserver (110) dazu konfiguriert ist, einen Audiofluss zu bedienen und die von der Cloud-Anwendung (115) empfangenen Anwendungsanweisungen auszuführen; und
wobei ein Ereigniswarteschlangenmechanismus des Systems dazu konfiguriert ist, zu bestimmen, ob ein Upload-Kommunikationspfad zwischen dem Medienserver (110) und der Cloud-Anwendung (115) unterbrochen wurde, und die Überlebensfähigkeit als Reaktion auf das Bestimmen, dass der Kommunikationspfad unterbrochen wurde, aufzurufen, und wobei, wenn die Überlebensfähigkeit aufgerufen wird, der Medienserver (110) zu Folgendem konfiguriert ist:
damit fortzufahren, die Eingabe während der Unterbrechung zu empfangen und zu verarbeiten,
die Eingabe zur zukünftigen Bereitstellung an die Cloud-Anwendung unter Verwendung des Ereigniswarteschlangenmechanismus (115) beizubehalten;
durch den Ereigniswarteschlangenmechanismus zu bestimmen, ob der Upload-Kommunikationspfad neu aufgebaut wurde, und die beibehaltene Eingabe mit intakter ursprünglicher Zeitsequenzierung an die Cloud-Anwendung (115) als Reaktion auf das Bestimmen, dass der physische Kommunikationspfad neu aufgebaut wurde, bereitzustellen.

15. System nach Anspruch 14, wobei der Medienserver (110) ferner einen Mechanismus zum Speichern von Nutzereingabedaten während der Unterbrechung und zum Bereitstellen der Nutzereingabedaten an die Cloud-Anwendung (115) bei Wiederherstellung umfasst.

## Revendications

1. Procédé pour la pérennité hors ligne dans un système de communication en nuage (100), dans lequel le système (100) comprend au moins une application en nuage (115) fonctionnant sur un serveur et un serveur multimédia (110), l'application en nuage fonctionnant sur ledit serveur distant du serveur multimédia, le procédé comprenant les étapes :
a. de réception, par le serveur multimédia (110), d'une communication provenant d'un utilisateur (105) ;
b. de réception, en provenance de l'utilisateur (105), d'une entrée sur le serveur multimédia (110) à travers une connexion point à point, l'entrée sur le serveur multimédia (110) étant fournie à l'application en nuage (115) ;
c. de transmission, à l'utilisateur (105), d'une réponse provenant du serveur multimédia (110), dans lequel le serveur multimédia (110) dessert le flux audio et exécute les instructions d'application reçues en provenance de l'application en nuage (115) ;
d. de détermination (305), par un mécanisme de mise en file d'attente d'événements du système (100), d'une éventuelle perturbation du trajet de communication de chargement entre le serveur multimédia (110) et l'application en nuage (115) ; et
e. d'invocation (310), par le serveur multimédia (110), de la pérennité en réponse à la détermination de la perturbation du trajet de communication ;
dans lequel l'étape d'invocation de la pérennité comprend les étapes :
de poursuite de la réception et du traitement de l'entrée lors de la perturbation ;
de conservation de l'entrée pour un acheminement futur vers l'application en nuage (115) à l'aide du mécanisme de mise en file d'attente d'événements ;
de détermination par le mécanisme de mise en file d'attente d'événements de l'éventuel ré-établissement du trajet de communication de chargement ; et
d'acheminement de l'entrée conservée avec le séquençage de temps initial intact vers l'application en nuage (115) en réponse à la détermination du ré-établissement du trajet de communication physique.

2. Procédé selon la revendication 1, dans lequel la pérennité comprend en outre le fait de permettre au serveur multimédia (110) de réaliser la communication sans communication aller-retour avec l'application en nuage (115) en fournissant des ressources et des trajets logiques.

3. Procédé selon la revendication 2, dans lequel l'étape de fourniture de ressources et de trajets logiques comprend la fourniture d'au moins l'un parmi : un cache de ressource de serveur multimédia, des opérations de route hôte et une distribution de charge.

4. Procédé selon la revendication 3, dans lequel le serveur multimédia (110) peut accéder au cache de ressource de serveur multimédia lorsqu'un trajet de téléchargement de l'application en nuage (115) échoue.

5. Procédé selon la revendication 3, dans lequel les opérations de route hôte comprennent :
a. l'exploitation, par le serveur multimédia (110), de caches de ressource locaux en faisant en sorte qu'ils incluent des informations de route d'appelant et en utilisant les informations de route d'appelant pour router l'utilisateur (105) jusqu'à un système de réponse vocale interactif ;
b. le référencement de données de route locale ; et
c. la direction, par le serveur multimédia (110), de la communication jusqu'au système de réponse vocale interactif (100) .

6. Procédé selon la revendication 3, dans lequel la distribution de charge comprend le routage d'un utilisateur (105) jusqu'à différents serveurs multimédia (110) dans un groupe de serveurs multimédia (110) qui sont dirigés par l'application en nuage (115) pour desservir un groupe d'utilisateurs (105) spécifique, dans lequel une charge équilibrée est conservée dans tout le système (100).

7. Procédé selon la revendication 1, comprenant en outre l'étape de reprise après la perturbation du trajet de communication.

8. Procédé selon la revendication 7, dans lequel l'étape de reprise comprend en outre :
a. le fait de déterminer que le trajet de communication est ré-établi entre le serveur multimédia (110) et l'application en nuage (115) ;
b. l'acheminement de tous les événements de communication vers l'application en nuage (115) via une file d'attente d'acheminement ; et
c. l'acheminement de données vers l'application en nuage (115) lors de la reprise.

9. Procédé selon la revendication 8, dans lequel la file d'attente d'acheminement est capable de stocker localement des événements de communication.

10. Procédé selon la revendication 8, dans lequel les données ont été stockées sur le serveur multimédia (110) pendant la perturbation du trajet de communication.

11. Procédé selon la revendication 10, dans lequel les données sont cryptées tout le temps qu'elles sont stockées sur le serveur multimédia (110) pendant la perturbation.

12. Procédé selon la revendication 8, dans lequel les données comprennent : des enregistrements de communication, une messagerie vocale, des fax, des informations de communication, un code DTMF, une entrée vocale et des détails d'interaction.

13. Procédé selon la revendication 1, dans lequel le serveur multimédia (110) comprend un système de réponse vocale interactif (100).

14. Système pour une pérennité hors ligne dans un système de communication en nuage (100) comprenant :
a. un serveur multimédia (110) comprenant un système de réponse vocale interactif, le serveur multimédia (110) étant conçu pour recevoir, en provenance d'un utilisateur (105), une entrée à travers une connexion point à point ; et
b. une application en nuage fonctionnant sur un serveur distant du serveur multimédia (115) conçu pour communiquer avec le serveur multimédia (110)
c. sur un trajet de communication de réseau
dans lequel l'entrée de l'utilisateur (105) reçue au niveau du serveur multimédia (110) est fournie à l'application en nuage (115) en provenance du serveur multimédia (110) ; l'application en nuage (115) est conçue pour fournir des instructions d'application au serveur multimédia (110) ; et le serveur multimédia (110) est conçu pour desservir un flux audio et pour exécuter les instructions d'application reçues en provenance de l'application en nuage (115) ; et
dans lequel un mécanisme de mise en file d'attente d'événements du système est conçu pour déterminer si un trajet de communication de charge a été perturbé entre le serveur multimédia (110) et l'application en nuage (115) et pour invoquer la pérennité en réponse à la détermination de la perturbation du trajet de communication, et lorsque la pérennité est invoquée, le serveur multimédia (110) est conçu pour :
continuer à recevoir et traiter l'entrée lors de la perturbation,
conserver l'entrée pour un acheminement futur vers l'application en nuage à l'aide du mécanisme de mise en file d'attente d'événements (115) ;
déterminer par le biais du mécanisme de mise en file d'attente d'événements si le trajet de communication de chargement a été ré-établi ; et
acheminer l'entrée conservée avec le séquençage de temps initial intact vers l'application en nuage (115) en réponse à la détermination du ré-établissement du trajet de communication physique.

15. Système selon la revendication 14, dans lequel le serveur multimédia (110) comprend en outre un mécanisme permettant de stocker des données entrées par l'utilisateur lors de la perturbation et d'acheminer les données entrées par l'utilisateur vers l'application en nuage (115) lors de la reprise.
